# EUROPEAN PATENT APPLICATION

(11) **EP 3 336 681 A1**
(43) Date of publication of application: **20.06.2018**
(21) Application number: 16850338.1
(22) Date of filing: 27.09.2016
(51) Int. Cl.: G06F 3/06

(54) **METHOD AND APPARATUS FOR READING DISK ARRAY**

(30) Priority: 30.09.2015 CN 201510644380
(71) Applicant: Huawei Technologies Co., Ltd., Longgang District Shenzhen, Guangdong 518129 (CN)
(72) Inventor: ZHANG, Jian, Shenzhen Guangdong 518129 (CN); ZHANG, Xiang, Shenzhen Guangdong 518129 (CN); WU, Liming, Shenzhen Guangdong 518129 (CN)
(74) Representative: Maiwald Patent- und Rechtsanwaltsgesellschaft mbH
(86) International application number: PCT/CN2016/100419
(87) International publication number: WO 2017/054714

(57) **Abstract**

The present invention relates to the field of storage technologies, and discloses a method and an apparatus for reading a redundant array of independent disks. The method includes: receiving a first read request, where the first read request includes an identifier of a to-be-read logical block (S101); sending a first command to a controller of a first hard disk when a first cache does not include data stored in the to-be-read logical block, where the first hard disk is a hard disk including the to-be-read logical block, and the first command is used to instruct the controller of the first hard disk to return the data stored in the to-be-read logical block (S102); outputting the data returned by the controller of the first hard disk, and storing the returned data in the first cache (S103); and deleting the returned data stored in the first cache, or controlling the controller of the first hard disk to delete the returned data stored in a second cache (S104), where the second cache is a cache of the controller, and the returned data stored in the second cache is stored after the controller of the first hard disk reads, according to the first command, the data from the to-be-read logical block, or is stored before the controller of the first hard disk receives the first command.

## Description

### TECHNICAL FIELD

The present invention relates to the field of storage technologies, and in particular, to a method and an apparatus for reading a redundant array of independent disks.

### BACKGROUND

A redundant array of independent disks (Redundant Arrays of Independent Disks, RAID for short) (a full name of a redundant array of independent disks is a redundant array of independent disks) is used to provide storage space for a host and is responsible for an input-output (Input-Output, IO for short) service of the host. The RAID includes a control apparatus and multiple cost-effective hard disks. The control apparatus integrates storage space of the multiple hard disks, and manages the space.

The following describes an existing method procedure related to a RAID read operation.

After receiving a read request sent by the host, the control apparatus of the RAID first queries whether a cache (Cache) of the control apparatus includes data that needs to be read. If the cache of the control apparatus includes the data that needs to be read, the data that needs to be read is directly obtained from the cache of the control apparatus and output.

If the cache of the control apparatus does not include the data that needs to be read, a hard disk in which the data that needs to be read is stored is determined, and the determined hard disk is controlled to return the data that needs to be read.

For the determined hard disk, whether a cache of the hard disk includes the data that needs to be read is first queried. If the cache of the hard disk includes the data that needs to be read, the data that needs to be read is directly obtained from the cache of the hard disk.

If the cache of the hard disk does not include the data that needs to be read, corresponding data is read from a disk sheet of the hard disk. After the data is read, a copy of the read data is first stored in the cache of the hard disk, and then the read data is returned to the control apparatus.

After receiving the read data, the control apparatus first stores a copy of the read data in the cache of the control apparatus, and then outputs the read data.

During implementation of the present invention, the inventor finds that the prior art has at least the following problem:

In the foregoing procedure, when neither the cache of the control apparatus nor the cache of the hard disk includes the data that needs to be read, the data is read from the hard disk. After the data is read from the hard disk, a copy of the data is first stored in the cache of the hard disk. In addition, another copy of the data needs to be stored in the cache of the control apparatus after the data is returned to the control apparatus. This results in a waste of storage space.

### SUMMARY

To resolve a problem of a waste of storage space of a RAID, embodiments of the present invention provide a method and an apparatus for reading a redundant array of independent disks. The technical solutions are as follows:

According to a first aspect, a method for reading a redundant array of independent disks is provided, where the method includes:
receiving a first read request, where the first read request includes an identifier of a to-be-read logical block;
sending a first command to a controller of a first hard disk when a first cache cache does not include data stored in the to-be-read logical block, where the first cache is a cache of a control apparatus of a redundant array of independent disks RAID, the first hard disk is a hard disk including the to-be-read logical block, and the first command is used to instruct the controller of the first hard disk to return the data stored in the to-be-read logical block;
outputting the data returned by the controller of the first hard disk, and storing the returned data in the first cache; and
deleting the returned data stored in the first cache, or controlling the controller of the first hard disk to delete the returned data stored in a second cache, where the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

In a first implementation of the first aspect, the deleting the returned data stored in the first cache, or controlling the controller of the first hard disk to delete the returned data stored in a second cache includes:
when a predetermined condition is satisfied, deleting the returned data stored in the first cache; or
when the predetermined condition is not satisfied, controlling the controller of the first hard disk to delete the returned data stored in the second cache, where
the predetermined condition includes either of the following cases: a remaining storage capacity of the first cache is less than a preset storage capacity, and the returned data is data of a specified type.

In a second implementation of the first aspect, when the controller of the first hard disk is controlled to delete the returned data stored in the second cache, the first command is further used to instruct the controller of the first hard disk to delete, after returning the data stored in the to-be-read logical block, the returned data stored in the second cache.

In a third implementation of the first aspect, the first command is a Small Computer System Interface SCSI protocol Read 10 command, and the first command carries first address information, a first identifier, and a second identifier of the logical block, where the first identifier is used to indicate returning data that corresponds to the first address information, and the second identifier is used to indicate deleting, after the data that corresponds to the first address information is returned, the returned data stored in the second cache.

In a fourth implementation of the first aspect, the controlling the controller of the first hard disk to delete the returned data stored in a second cache includes:
sending a second command to the controller of the first hard disk, where the second command is used to instruct the controller of the first hard disk to delete the returned data stored in the second cache.

In a fifth implementation of the first aspect, the second command is a SCSI protocol command, and the second command carries second address information and a third identifier of the logical block, where the third identifier is used to indicate deleting data that is in the data stored in the second cache and that corresponds to the second address information.

In a sixth implementation of the first aspect, the method further includes:
determining an identifier of a pre-read logical block in the first hard disk according to the identifier of the to-be-read logical block; and
sending a third command to the controller of the first hard disk, where the third command is used to instruct the controller of the first hard disk to obtain data stored in the pre-read logical block, and store the obtained data in the second cache.

In a seventh implementation of the first aspect, before the sending a third command to the controller of the first hard disk, the method further includes:
receiving a second read request, where the first hard disk includes a logical block that corresponds to the second read request, the first cache does not include data stored in the logical block that corresponds to the second read request, and the third command is further used to instruct the controller of the first hard disk to return the data stored in the logical block that corresponds to the second read request.

In an eighth implementation of the first aspect, the third command is a SCSI protocol command, and the third command carries third address information of the logical block, and fourth address information, a fourth identifier, and a fifth identifier of the logical block, where the fourth identifier is used to indicate obtaining data that corresponds to the third address information, and storing the obtained data in the second cache, and the fifth identifier is used to indicate returning data that corresponds to the fourth address information.

According to a second aspect, an apparatus for reading a redundant array of independent disks is provided, where the apparatus includes:
a receiving module, configured to receive a first read request, where the first read request includes an identifier of a to-be-read logical block;
a sending module, configured to send a first command to a controller of a first hard disk when a first cache does not include data stored in the to-be-read logical block, where the first cache is a cache of the apparatus, the first hard disk is a hard disk including the to-be-read logical block, and the first command is used to instruct the controller of the first hard disk to return the data stored in the to-be-read logical block;
an output module, configured to: output the data returned by the controller of the first hard disk, and store the returned data in the first cache; and
a deletion module, configured to: delete the returned data stored in the first cache, or control the controller of the first hard disk to delete the returned data stored in a second cache, where the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

In a first implementation of the second aspect, the deletion module is configured to:
when a predetermined condition is satisfied, delete the returned data stored in the first cache; or
when the predetermined condition is not satisfied, control the controller of the first hard disk to delete the returned data stored in the second cache, where
the predetermined condition includes either of the following cases: a remaining storage capacity of the first cache is less than a preset storage capacity, and the returned data is data of a specified type.

In a second implementation of the second aspect, when the deletion module controls the controller of the first hard disk to delete the returned data stored in the second cache, the first command sent by the sending module is further used to instruct the controller of the first hard disk to delete, after returning the data stored in the to-be-read logical block, the returned data stored in the second cache.

In a third implementation of the second aspect, the first command is a Small Computer System Interface SCSI protocol Read 10 command, and the first command carries first address information, a first identifier, and a second identifier of the logical block, where the first identifier is used to indicate returning data that corresponds to the first address information, and the second identifier is used to indicate deleting, after the data that corresponds to the first address information is returned, the returned data stored in the second cache.

In a fourth implementation of the second aspect, the sending module is further configured to:
send a second command to the controller of the first hard disk, where the second command is used to instruct the controller of the first hard disk to delete the returned data stored in the second cache.

In a fifth implementation of the second aspect, the second command is a SCSI protocol command, and the second command carries second address information and a third identifier of the logical block, where the third identifier is used to indicate deleting data that is in the data stored in the second cache and that corresponds to the second address information.

In a sixth implementation of the second aspect, the apparatus further includes a determining module, where
the determining module is configured to determine an identifier of a pre-read logical block in the first hard disk according to the identifier of the to-be-read logical block; and
the sending module is further configured to send a third command to the controller of the first hard disk, where the third command is used to instruct the controller of the first hard disk to obtain data stored in the pre-read logical block, and store the obtained data in the second cache.

In a seventh implementation of the second aspect, the receiving module is further configured to:
receive a second read request, where the first hard disk includes a logical block that corresponds to the second read request, and the first cache does not include data stored in the logical block that corresponds to the second read request; and
the third command sent by the sending module is further used to instruct the controller of the first hard disk to return the data stored in the logical block that corresponds to the second read request.

In an eighth implementation of the second aspect, the third command is a SCSI protocol command, and the third command carries third address information of the logical block, and fourth address information, a fourth identifier, and a fifth identifier of the logical block, where the fourth identifier is used to indicate obtaining data that corresponds to the third address information, and storing the obtained data in the second cache, and the fifth identifier is used to indicate returning data that corresponds to the fourth address information.

The technical solutions provided in the embodiments of the present invention have the following beneficial effects:

The first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a hardware structure of a RAID according to an embodiment of the present invention;
FIG. 2 is a flowchart of a method for reading a redundant array of independent disks according to a first embodiment of the present invention;
FIG. 3 is a flowchart of a method for reading a redundant array of independent disks according to a second embodiment of the present invention;
FIG. 4 is a flowchart of a method for reading a redundant array of independent disks according to a third embodiment of the present invention;
FIG. 5 is a flowchart of a method for reading a redundant array of independent disks according to a fourth embodiment of the present invention;
FIG. 6 is a flowchart of a method for reading a redundant array of independent disks according to a fifth embodiment of the present invention;
FIG. 7 is a schematic structural diagram of an apparatus for reading a redundant array of independent disks according to a sixth embodiment of the present invention;
FIG. 8 is a schematic structural diagram of an apparatus for reading a redundant array of independent disks according to a seventh embodiment of the present invention; and
FIG. 9 is a schematic diagram of a hardware structure of an apparatus for reading a redundant array of independent disks according to an eighth embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

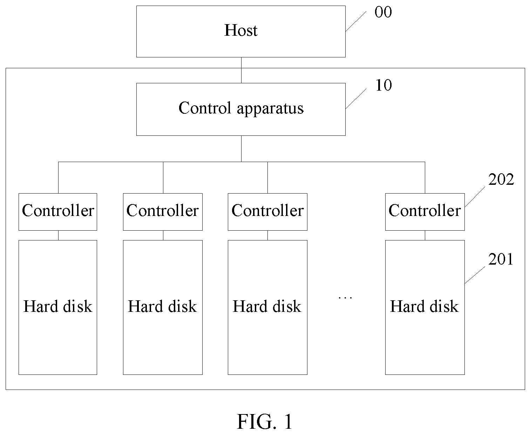

To facilitate understanding of the technical solutions provided in the embodiments of the present invention, a hardware structure of a RAID is described first. As shown in FIG. 1, a RAID includes a control apparatus 10 and multiple hard disk apparatuses. Each hard disk apparatus includes a hard disk 201 and a hard disk controller 202. The control apparatus 10 may be separately connected to a host 00 and each hard disk controller 202. The hard disk controller 202 is connected to a corresponding hard disk 201.

A cache is provided on both the control apparatus 10 and each hard disk controller 202. The cache of the control apparatus 10 is mainly configured to cache a service IO sent by the host, and provide a function of processing the service IO, for example, a read hit. The read hit means that IO data that needs to be read is already cached in the cache of the control apparatus 10, and can be directly obtained from the cache of the control apparatus 10 and returned to the host. The cache of the hard disk controller 202 is mainly configured to cache an IO that is delivered by the control apparatus 10 to the hard disk and an IO that is read from the hard disk, thereby implementing a read hit function and a cache writing function.

In this embodiment, a first cache is the cache of the control apparatus 10, and a second cache is the cache of the hard disk controller 202.

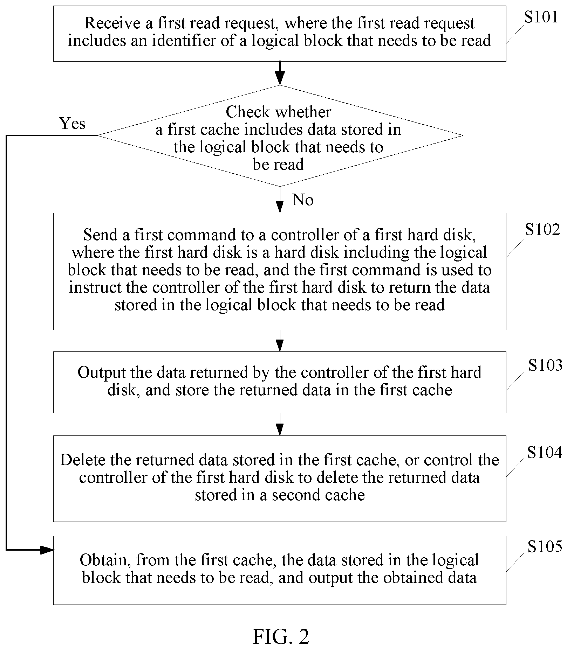

FIG. 2 is a flowchart of a method for reading a redundant array of independent disks according to a first embodiment of the present invention. The method provided in this embodiment is applicable to the control apparatus of the RAID shown in FIG. 1. The RAID includes multiple hard disks. As shown in FIG. 2, the method includes the following steps.

Step S101: Receive a first read request, where the first read request includes an identifier of a to-be-read logical block.

After receiving the first read request, the control apparatus first checks whether a first cache includes data stored in the to-be-read logical block. When the first cache does not include the data stored in the to-be-read logical block, step S102 is performed. When the first cache includes the data stored in the to-be-read logical block, step S105 is performed. The first cache is a cache of the control apparatus.

Step S102. Send a first command to a controller of a first hard disk, where the first hard disk is a hard disk including the to-be-read logical block, and the first command is used to instruct the controller of the first hard disk to return data stored in the to-be-read logical block.

Step S103. Output the data returned by the controller of the first hard disk, and store the returned data in a first cache.

Step S104. Delete the returned data stored in the first cache, or control the controller of the first hard disk to delete the returned data stored in a second cache.

The returned data stored in the second cache is stored after the controller of the first hard disk reads, according to the first command, the data from the to-be-read logical block, or is stored before the controller of the first hard disk receives the first command. The second cache is a cache of the controller of the first hard disk.

Step S105. Obtain, from the first cache, data stored in the to-be-read logical block, and output the obtained data.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

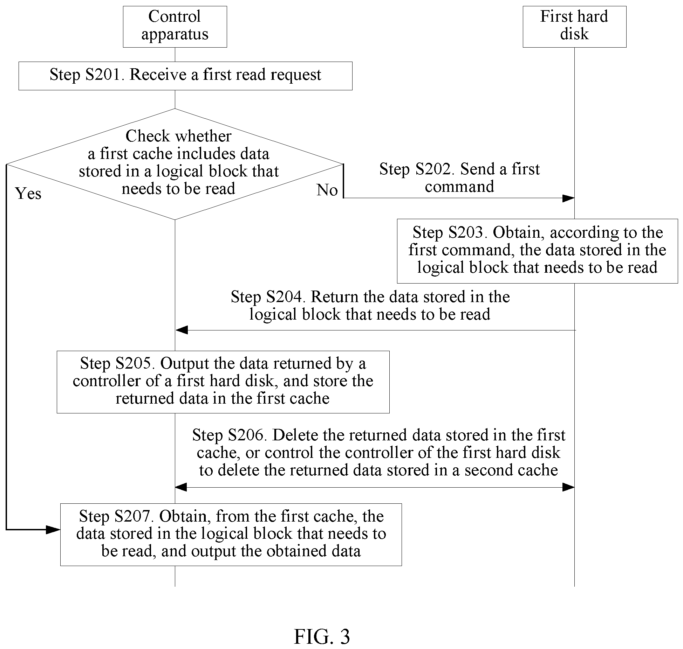

FIG. 3 is a flowchart of a method for reading a redundant array of independent disks according to a second embodiment of the present invention. As shown in FIG. 3, the method includes the following steps.

Step S201. A control apparatus receives a first read request, and checks whether a first cache includes data stored in a to-be-read logical block, where the first read request includes an identifier of the to-be-read logical block.

Specifically, the first read request may be sent by a host. After receiving the first read request, the control apparatus first checks whether the first cache includes the data stored in the to-be-read logical block. When the first cache does not include the data stored in the to-be-read logical block, step S202 is performed. When the first cache includes the data stored in the to-be-read logical block, step S207 is performed. The first cache is a cache of the control apparatus.

Specifically, a correspondence between an identifier of a logical block and an address in which data is stored in the first cache is stored in the control apparatus. The control apparatus may check, according to the correspondence, whether the first cache includes the data stored in the to-be-read logical block.

Step S202. The control apparatus sends a first command to a controller of a first hard disk, where the first hard disk is a hard disk including the to-be-read logical block, and the first command is used to instruct the controller of the first hard disk to return the data stored in the to-be-read logical block.

When the first cache does not include the data stored in the to-be-read logical block, the control apparatus first determines, according to a pre-established correspondence between an identifier of a logical block and an identifier of a hard disk, a hard disk to which the to-be-read logical block belongs, that is, determines the first hard disk, and then sends the first command to the controller of the first hard disk.

The first command may be a Small Computer System Interface (Small Computer System Interface, SCSI for short) protocol command, for example, a SCSI protocol Read 10 command. The first command carries first address information and a first identifier of the logical block. The first identifier is used to indicate returning data that corresponds to the first address information. The first address information is used to indicate an address of the to-be-read logical block.

As shown in Table 1, the Read 10 command includes 10 bytes. The 0^{th} byte belongs to a command operation code (Operation Code) field, and the 2^{nd} to the 5^{th} bytes belong to a logical block address (Logical Block Address) field. Optionally, the operation code field carries the first identifier, and the logical block address field carries the first address information of the logical block.

**Table 1**

| Bit Byte | 7 | 6 | 5 | 4 | 3 | 2 | 1 | 0 |
|---|---|---|---|---|---|---|---|---|
| 0 | Command operation code (Operation Code) | | | | | | | |
| 1 | RDPROTECT | | | DPO | FUA | Reserved | FUA_NV | Obsolete |
| 2 | Logical block address (Logical Block Address) | | | | | | | |
| ... | | | | | | | | |
| 5 | | | | | | | | |
| 6 | Reserved (Reserved) | | | Group number (GROUP NUMBER) | | | | |
| 7 | Data length (Transfer Length) | | | | | | | |
| 8 | | | | | | | | |
| 9 | Control (CONTROL) | | | | | | | |

The first command may alternatively be a non-volatile memory express (Non-Volatile Memory Express, NVMe for short) protocol command. Specifically, the NVMe 1.2 protocol supports commands such as Write Data, Read Data, PRP SGL List, Completion Queue, and Submission Queue, to process data exchange between the control apparatus and the controller of the hard disk. The first command may still use one or more of the commands, or may extend data exchange formats of some of the commands.

The controller of the first hard disk receives the first command.

Step S203. The controller of the first hard disk obtains, according to the first command, the data stored in the to-be-read logical block.

After receiving the first command, the controller of the first hard disk first checks whether a second cache includes the data stored in the to-be-read logical block. When the second cache does not include the data stored in the to-be-read logical block, the stored data is read from the to-be-read logical block. When the second cache includes the data stored in the to-be-read logical block, the data stored in the to-be-read logical block is directly obtained from the second cache. The second cache is a cache of the controller of the first hard disk.

Step S204. The controller of the first hard disk returns, to the control apparatus, the data stored in the to-be-read logical block.

The controller of the first hard disk sends, after obtaining the data stored in the to-be-read logical block, the obtained data to the control apparatus.

Step S204 further includes: when the controller of the first hard disk reads the stored data from the to-be-read logical block, further storing, by the controller of the first hard disk, the read data in the second cache.

The control apparatus receives the data returned by the controller of the first hard disk.

Step S205. The control apparatus outputs the data returned by the controller of the first hard disk, and stores the returned data in the first cache.

Specifically, after receiving the data returned by the controller of the first hard disk, the control apparatus outputs the returned data to the host, and stores the returned data in the first cache.

Step S206. The control apparatus deletes the returned data stored in the first cache, or controls the controller of the first hard disk to delete the returned data stored in a second cache.

The returned data stored in the second cache is stored after the controller of the first hard disk reads, according to the first command, the data from the to-be-read logical block, or is stored before the controller of the first hard disk receives the first command.

Step S206 may include: when a predetermined condition is satisfied, deleting, by the control apparatus, the returned data stored in the first cache; or when a predetermined condition is not satisfied, controlling, by the control apparatus, the controller of the first hard disk to delete the returned data stored in the second cache. The predetermined condition includes either of the following cases: a remaining storage capacity of the first cache is less than a preset storage capacity, and the returned data is data of a specified type.

In this embodiment, the returned data (data that the read request requests to read) may be classified into two types: metadata and non-metadata. The metadata includes configuration information of a RAID, a data access bitmap, or the like. The configuration information may include a mapping relationship, established in the RAID, between a logical hard disk and a physical hard disk, or a mapping relationship, established in the RAID, between logical block space and hard disk space. The data access bitmap records whether data is written into a logical block. Optionally, the data of the specified type may be metadata. It should be noted that the foregoing two types are merely examples, and the returned data may be classified into another type in another implementation. For example, the metadata may be further divided into more specific types: important metadata and ordinary metadata.

When the remaining storage capacity of the first cache is less than the preset storage capacity, the returned data stored in the first cache is deleted, to prevent the first cache from being completely occupied.

A manner of controlling the controller of the first hard disk to delete the returned data stored in the second cache includes: sending, by the control apparatus, a second command to the controller of the first hard disk, where the second command is used to instruct the controller of the first hard disk to delete the returned data stored in the second cache.

The second command may be a newly defined SCSI protocol command, and the second command carries second address information and a third identifier of the logical block. The third identifier is used to indicate deleting data that is in the data stored in the second cache and that corresponds to the second address information. The second address information is used to indicate an address of a logical block that corresponds to the data that needs to be deleted.

Optionally, a format of the second command is shown in the following Table 2.

**Table 2**

| Bit Byte | 7 | 6 | 5 | 4 | 3 | 2 | 1 | 0 |
|---|---|---|---|---|---|---|---|---|
| 0 | Operation Code | | | | | | | |
| 1 | Cache Control Code | | | | Special Control Code | | | |
| 2 | Logical Block Address | | | | | | | |
| ... | | | | | | | | |
| 5 | | | | | | | | |
| 6 | Transfer Length | | | | | | | |
| 7 | | | | | | | | |

Referring to Table 2, the second command may include eight bytes. The 0^{th} byte belongs to a command operation code (Operation Code) field; the 0^{th} to the 3^{rd} bits of the 1^{st} byte belong to a special control code (Special Control Code) field, and the 4^{th} to the 7^{th} bits of the 1^{st} byte belong to a cache control code (Cache Control Code) field; the 2^{nd} to the 5^{th} bytes belong to a logical block address (Logical Block Address) field; and the 6^{th} and the 7^{th} bytes belong to a data length (Transfer Length) field.

The operation code field indicates a SCSI command operation code. For example, when a value of the field is 0x6F, it indicates that the command is a SCSI command frame for cache control.

The special control code field indicates a special control code, and is used to extend more specific operations in a specific type of the cache control code, and is reserved temporarily.

The cache control code field indicates a specific cache operating type. For example, 0001 indicates reading cache data, 0010 indicates writing cache data, and 0011 indicates deleting cache data.

The logical block address field indicates an address of a logical block that corresponds to data to be deleted. For example, Ox01000 indicates operating a location of an address of 0x01000 of cache space.

The transfer length field indicates a length of data. For example, 0xFF indicates that a length of data to be read is set to 255 bytes.

During implementation, the logical block address field shown in Table 2 may carry the second address information, and the cache control code field may carry the third identifier.

Step S207. Obtain, from the first cache, the data stored in the to-be-read logical block, and output the obtained data.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

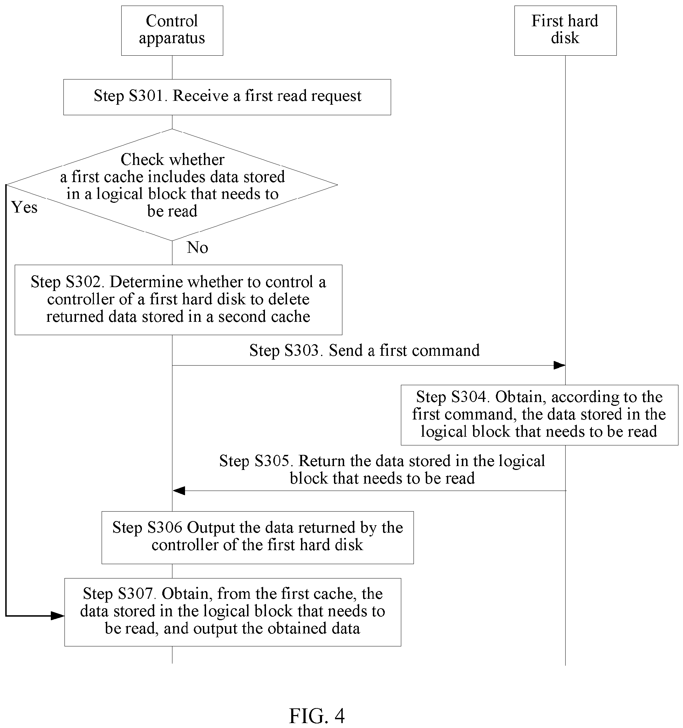

FIG. 4 is a flowchart of a method for reading a redundant array of independent disks according to a third embodiment of the present invention. Compared with the second embodiment, a manner, provided in this embodiment, of controlling a controller of a first hard disk to delete returned data stored in a second cache is different. As shown in FIG. 4, the method includes the following steps.

Step S301. A control apparatus receives a first read request, and checks whether a first cache includes data stored in a to-be-read logical block, where the first read request includes an identifier of the to-be-read logical block.

When the first cache does not include the data stored in the to-be-read logical block, step S302 is performed. When the first cache includes the data stored in the to-be-read logical block, step S307 is performed. The first cache is a cache of the control apparatus.

Step S301 is the same as step S201 in the second embodiment, and details are not described herein again.

Step S302. The control apparatus determines whether to control a controller of a first hard disk to delete returned data stored in a second cache, where the first hard disk is a hard disk including the to-be-read logical block.

Step S302 includes: when a predetermined condition is satisfied, determining, by the control apparatus, that returned data stored in the first cache needs to be deleted; or when a predetermined condition is not satisfied, determining, by the control apparatus, that the controller of the first hard disk needs to be controlled to delete the returned data stored in the second cache.

Step S303 is performed after step S302.

Step S303. The control apparatus sends a first command to the controller of the first hard disk, where the first command is used to instruct the controller of the first hard disk to return the data stored in the to-be-read logical block.

When the control apparatus determines that the controller of the first hard disk needs to be controlled to delete the returned data stored in the second cache, the first command is further used to instruct the controller of the first hard disk to delete, after returning the data stored in the to-be-read logical block, the returned data stored in the second cache.

Optionally, the first command carries first address information, a first identifier, and a second identifier of the logical block. The first identifier is used to indicate returning data that corresponds to the first address information. The second identifier is used to indicate deleting, after the data that corresponds to the first address information is returned, the returned data stored in the second cache. The first address information is used to indicate an address of the to-be-read logical block.

A specific format of the first command is shown in Table 1. The logical block address field shown in Table 1 carries the first address information, and the command operation code (Operation Code) field shown in Table 1 carries the first identifier. The reserved (Reserved) field to which the 5^{th} to the 7^{th} bits of the 6^{th} byte belong carries the second identifier. For example, it may be preset that when the second identifier is 001, it indicates deleting the returned data stored in the second cache, and when the second identifier is 000, it indicates not deleting the returned data stored in the second cache.

The controller of the first hard disk receives the first command.

Step S304. The controller of the first hard disk obtains, according to the first command, the data stored in the to-be-read logical block.

Step S304 is the same as step S203 in the second embodiment, and details are not described herein again.

Step S305. The controller of the first hard disk returns, to the control apparatus, the data stored in the to-be-read logical block.

Step S305 is the same as step S204 in the second embodiment, and details are not described herein again.

It should be noted that, when the first command is further used to instruct the controller of the first hard disk to delete the returned data stored in the second cache, the controller of the first hard disk deletes the returned data stored in the second cache.

Step S306. The control apparatus outputs the data returned by the controller of the first hard disk.

When the control apparatus determines that the returned data stored in the second cache needs to be deleted, step S306 further includes: storing the returned data in the first cache.

Step S306 is the same as step S205 in the second embodiment, and details are not described herein again.

Step S307. Obtain, from the first cache, the data stored in the to-be-read logical block, and output the obtained data.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of a RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be a cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

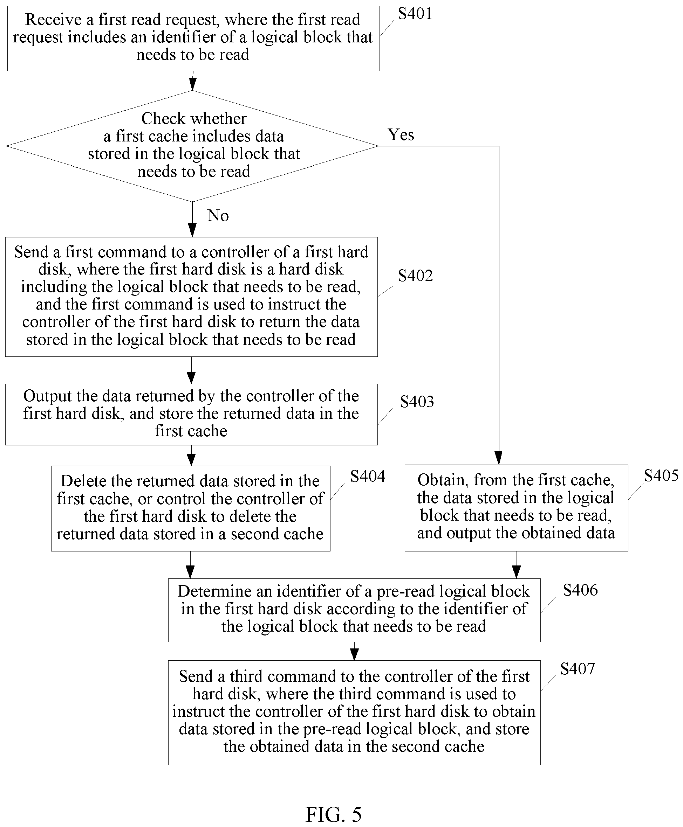

FIG. 5 is a flowchart of a method for reading a redundant array of independent disks according to a fourth embodiment of the present invention. The method provided in this embodiment is applicable to the control apparatus of the RAID shown in FIG. 1. The RAID includes multiple hard disks. In a description of this embodiment, when responding to a read request from a host, the control apparatus further controls a hard disk to pre-read data. As shown in FIG. 5, the method includes the following steps.

Step S401 to step S405 are respectively the same as step S101 to step S105 in the first embodiment, and details are not described herein again.

Step S406. Determine an identifier of a pre-read logical block in the first hard disk according to the identifier of the to-be-read logical block.

Pre-read data is data that is estimated to be read next time according to data currently read, and the estimated data is pre-read from a hard disk and is stored in a cache of the hard disk. In this way, when data that needs to be read next time is the estimated data, the data that needs to be read next time may be directly read from the cache of the hard disk, thereby improving read efficiency.

This embodiment provides two manners of determining the identifier of the pre-read logical block in the first hard disk, including a first manner and a second manner.

In the first manner, step S406 may include: obtaining, from a pre-established correspondence between an identifier of a logical block and an identifier of a pre-read logical block, the identifier of the pre-read logical block that corresponds to the identifier of the to-be-read logical block.

Specifically, during data reading, statistics on a logical block that is read after a current logical block is read may be collected, and the correspondence between an identifier of a logical block and an identifier of a pre-read logical block may be established according to a statistical result. For example, if a logical block B1 is always read after a logical block A1 is read, the logical block B1 is a pre-read logical block that corresponds to the logical block A1.

In the second manner, step S406 may include: first, calculating a current read sequence degree; then, comparing the current read sequence degree with a previous read sequence degree; and determining the identifier of the pre-read logical block in the first hard disk when the current read sequence degree is greater than the previous read sequence degree, where among pre-read logical blocks, a start logical block is a logical block after a last to-be-read logical block, and a quantity of the pre-read logical blocks is specified; or ending this procedure when the current read sequence degree is less than or equal to the previous read sequence degree.

A calculation formula of a read sequence degree is: a read sequence degree = (an accumulative quantity of read IOs in a forward seek + an accumulative quantity of sequentially read IOs without seeking / (an accumulative quantity of read IOs in a backward seek + 1). The accumulative quantity of read IOs in the forward seek is a quantity of logical blocks, in logical blocks that need to be read, having nonconsecutive logical addresses that sequentially increase according to a read sequence. The accumulative quantity of sequentially read IOs without seeking is a quantity of logical blocks, in the logical blocks that need to be read, having consecutive logical addresses that sequentially increase according to a read sequence. The accumulative quantity of read IOs in the backward seek is a quantity of logical blocks, in the logical blocks that need to be read, having logical addresses that sequentially decrease according to a read sequence.

Specifically, the logical blocks, in the logical blocks that need to be read, having the logical addresses that sequentially decrease according to the read sequence may include logical blocks having nonconsecutive logical addresses, or may include logical blocks having consecutive logical addresses.

During implementation, the first manner may be selected if a read service of the host is mainly oriented to a random data stream; or the second manner may be selected if a read service of the host is mainly oriented to a sequential data stream.

Step S407. Send a third command to the controller of the first hard disk, where the third command is used to instruct the controller of the first hard disk to obtain data stored in the pre-read logical block, and store the obtained data in the second cache.

Optionally, the third command may be a SCSI protocol command, and the third command carries third address information and a fourth identifier of the logical block. The fourth identifier is used to indicate obtaining data that corresponds to the third address information, and storing the obtained data in the second cache. The third address information is used to indicate an address of the pre-read logical block.

For a format of the third command, refer to the format shown in Table 1 or Table 2. The logical block address field may carry the third address information, and the operation code field may carry the fourth identifier.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

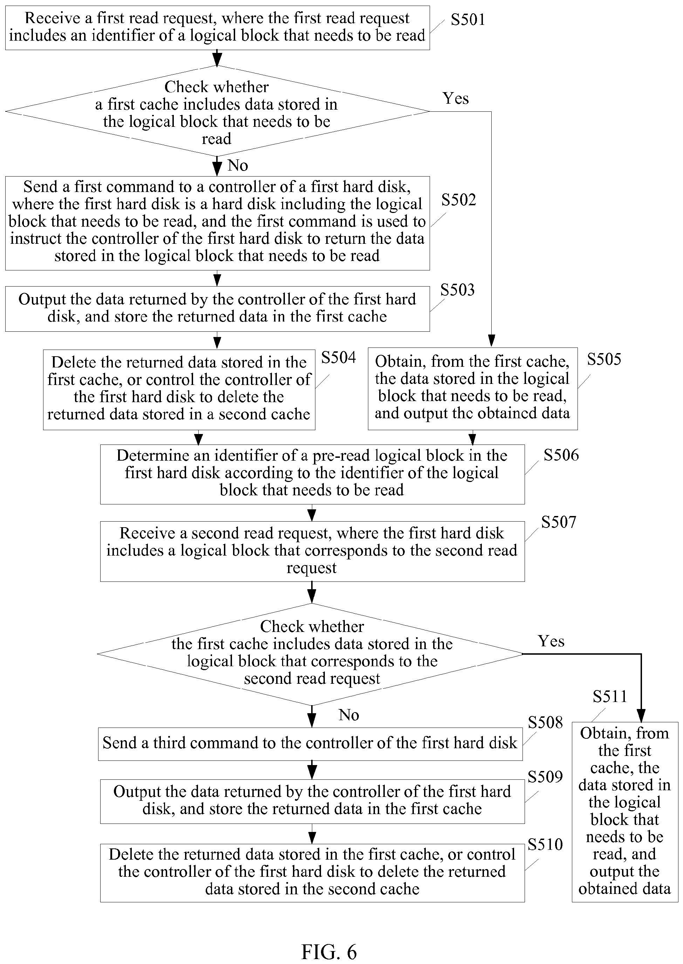

FIG. 6 is a flowchart of a method for reading a redundant array of independent disks according to a fifth embodiment of the present invention. The method provided in this embodiment is applicable to the control apparatus of the RAID shown in FIG. 1. The RAID includes multiple hard disks. Compared with the fourth embodiment, a manner, provided in this embodiment, of controlling a hard disk to pre-read data is different. As shown in FIG. 6, the method includes the following steps.

Step S501 to step S505 are respectively the same as step S101 to step S105 in the first embodiment, and details are not described herein again.

Step S506. Determine an identifier of a pre-read logical block in the first hard disk according to the identifier of the to-be-read logical block.

Step S506 is the same as step S406 in the fourth embodiment, and details are not described herein again.

Step S507. Receive a second read request, where the first hard disk includes a logical block that corresponds to the second read request.

When the first cache does not include data stored in the logical block that corresponds to the second read request, step S508 is performed. When the first cache includes data stored in the logical block that corresponds to the second read request, step S511 is performed. The first cache is a cache of the control apparatus.

Step S508. Send a third command to the controller of the first hard disk, where the third command is used to instruct the controller of the first hard disk to return data stored in the logical block that corresponds to the second read request, and is further used to instruct the controller of the first hard disk to obtain data stored in the pre-read logical block and store the obtained data in the second cache.

Optionally, the third command is a SCSI protocol command, and the third command carries third address information of the logical block, and fourth address information, a fourth identifier, and a fifth identifier of the logical block.

The fourth identifier is used to indicate obtaining data that corresponds to the third address information, and storing the obtained data in the second cache. The third address information is used to indicate an address of the pre-read logical block.

The fifth identifier is used to indicate returning data that corresponds to the fourth address information. The fourth address information is used to indicate an address of the logical block that corresponds to the second read request.

For a specific format of the third command, refer to a format shown in the following Table 3. For the format shown in Table 3, some bytes are extended based on the format shown in Table 1 (for example, 6 bytes are extended). The extended bytes belong to two fields: a cache logical block address (Cache Logical Block Address) field (including the 10^{th} to the 13^{th} bytes) and a cache data length (Cache Transfer Length) field (including the 14^{th} and the 15^{th} bytes). The cache transfer length field is used to indicate a length of pre-read data.

During implementation, the cache logical block address field carries the third address information, and a reserved (Reserved) field to which the 5^{th} to the 7^{th} bits of the 6^{th} byte belong carries the fourth identifier. For example, it may be preset that when the reserved field is 010, it indicates pre-reading data, and when the reserved field is 001, it indicates not pre-reading data. The logical block address field shown in Table 3 carries the fourth address information, and a command operation code (Operation Code) field carries the fifth identifier.

**Table 3**

| Bit Byte | 7 | 6 | 5 | 4 | 3 | 2 | 1 | 0 | |
|---|---|---|---|---|---|---|---|---|---|
| 0 | Operation Code | | | | | | | | |
| 1 | RDPROTECT | | | DPO | FUA | Reserved | FUA_NV | | Obsolete |
| 2 | Logical Block Address | | | | | | | | |
| ... | | | | | | | | | |
| 5 | | | | | | | | | |
| 6 | Reserved | | | GROUP NUMBER | | | | | |
| 7 | Transfer Length | | | | | | | | |
| 8 | | | | | | | | | |
| 9 | CONTROL | | | | | | | | |
| 10 | Cache Logical Block Address | | | | | | | | |
| ... | | | | | | | | | |
| 13 | | | | | | | | | |
| 14 | Cache Transfer Length | | | | | | | | |
| 15 | | | | | | | | | |

In addition, when the control apparatus determines that the controller of the first hard disk needs to be controlled to delete the return data stored in the second cache, the fifth identifier is further used to indicate deleting, after the data that corresponds to the fourth address information is returned, the returned data stored in the second cache.

Optionally, it may be preset that when the reserved field is 010, it indicates pre-reading data and deleting the returned data stored in the second cache, when the reserved field is 100, it indicates pre-reading data and not deleting the returned data stored in the second cache, when the reserved field is 001, it indicates not pre-reading data and deleting the returned data stored in the second cache, and when the reserved field is 110, it indicates neither pre-reading data nor deleting the returned data stored in the second cache.

Step S509. Output the data returned by the controller of the first hard disk, and store the returned data in the first cache.

Step S510. Delete the returned data stored in the first cache, or control the controller of the first hard disk to delete the returned data stored in the second cache.

Step S511. Obtain, from the first cache, the data stored in the to-be-read logical block, and output the obtained data.

Step S509 to step S511 are respectively the same as step S103 to step S105 in the first embodiment, and details are not described herein again.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

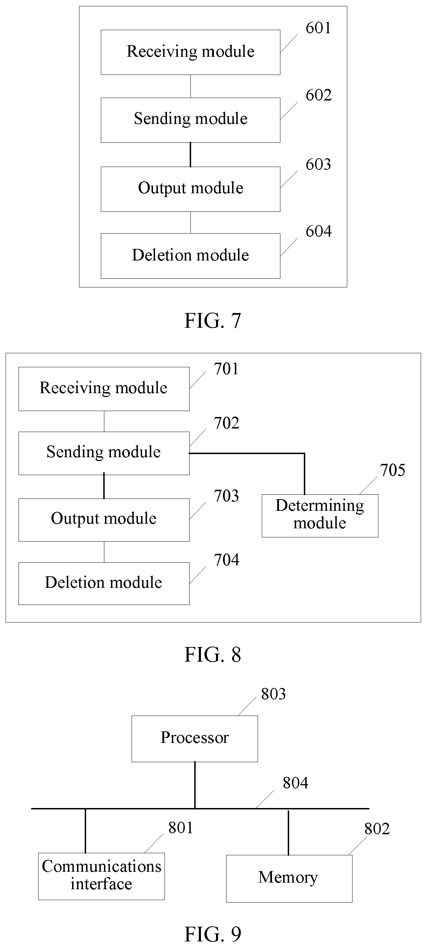

FIG. 7 is a schematic structural diagram of an apparatus for reading a redundant array of independent disks according to a sixth embodiment of the present invention. The apparatus provided in this embodiment may be disposed in the control apparatus of the RAID shown in FIG. 1, and is applicable to the method, provided in the first embodiment to the fifth embodiment, for reading a redundant array of independent disks. As shown in FIG. 7, the apparatus includes: a receiving module 601, a sending module 602, an output module 603, and a deletion module 604.

The receiving module 601 is configured to receive a first read request, where the first read request includes an identifier of a to-be-read logical block.

The sending module 602 is configured to send a first command to a controller of a first hard disk when a first cache does not include data stored in the to-be-read logical block, where the first cache is a cache of the apparatus, the first hard disk is a hard disk including the to-be-read logical block, and the first command is used to instruct the controller of the first hard disk to return the data stored in the to-be-read logical block.

The output module 603 is configured to: output the data returned by the controller of the first hard disk, and store the returned data in the first cache.

The deletion module 604 is configured to: delete the returned data stored in the first cache, or control the controller of the first hard disk to delete the returned data stored in a second cache, where the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

FIG. 8 is a schematic structural diagram of an apparatus for reading a redundant array of independent disks according to a seventh embodiment of the present invention. As shown in FIG. 8, the apparatus includes: a receiving module 701, a sending module 702, an output module 703, and a deletion module 704. The output module 703 is the same as the output module 603 in the apparatus provided in the sixth embodiment, and details are not described herein again. Differences between the apparatus provided in this embodiment and the apparatus provided in the sixth embodiment are as follows.

Optionally, the deletion module 704 is specifically configured to: when a predetermined condition is satisfied, delete the returned data stored in the first cache; or when a predetermined condition is not satisfied, control the controller of the first hard disk to delete the returned data stored in the second cache, where the predetermined condition includes either of the following cases: a remaining storage capacity of the first cache is less than a preset storage capacity, and the returned data is data of a specified type.

Optionally, when the deletion module 704 controls the controller of the first hard disk to delete the returned data stored in the second cache, the first command sent by the sending module 702 is further used to instruct the controller of the first hard disk to delete the returned data stored in the second cache.

Optionally, the first command is a SCSI protocol Read 10 command, and the first command carries first address information, a first identifier, and a second identifier of the logical block, where the first identifier is used to indicate returning data that corresponds to the first address information, and the second identifier is used to indicate deleting, after the data that corresponds to the first address information is returned, the returned data stored in the second cache.

Optionally, the sending module 702 is further configured to send a second command to the controller of the first hard disk, where the second command is used to instruct the controller of the first hard disk to delete the returned data stored in the second cache.

Optionally, the second command is a SCSI protocol command, and the second command carries second address information and a third identifier of the logical block, where the third identifier is used to indicate deleting data that is in the data stored in the second cache and that corresponds to the second address information.

Optionally, the apparatus further includes a determining module 705.

The determining module 705 is configured to determine an identifier of a pre-read logical block in the first hard disk according to the identifier of the to-be-read logical block.

The sending module 702 is further configured to send a third command to the controller of the first hard disk, where the third command is used to instruct the controller of the first hard disk to obtain data stored in the pre-read logical block, and store the obtained data in the second cache.

Optionally, the receiving module 701 is further configured to receive a second read request, where the first cache does not include data stored in a logical block that corresponds to the second read request, and the first hard disk includes the logical block that corresponds to the second read request. The third command sent by the sending module 702 is further used to instruct the controller of the first hard disk to return the data stored in the logical block that corresponds to the second read request.

Optionally, the third command is a SCSI protocol command, and the third command carries third address information of the logical block, and fourth address information, a fourth identifier, and a fifth identifier of the logical block, where the fourth identifier is used to indicate obtaining data that corresponds to the third address information, and storing the obtained data in the second cache, and the fifth identifier is used to indicate returning data that corresponds to the fourth address information.

In this embodiment of the present invention, the first read request is received, where the first read request includes the identifier of the to-be-read logical block; the first command is sent to the controller of the first hard disk when the first cache does not include the data stored in the to-be-read logical block, where the first hard disk is the hard disk including the to-be-read logical block, and the first command is used to instruct the controller of the first hard disk to return the data stored in the to-be-read logical block; the data returned by the controller of the first hard disk is output, and the returned data is stored in the first cache, where the first cache may be the cache of the control apparatus of the RAID; and the returned data stored in the first cache is deleted, or the controller of the first hard disk is controlled to delete the returned data stored in the second cache, where the returned data stored in the second cache is stored after the controller of the first hard disk reads, according to the first command, the data from the to-be-read logical block, or is stored before the controller of the first hard disk receives the first command, and the second cache may be the cache of the controller of the first hard disk. In this way, the read data stored in only one of the two caches of the RAID (the cache of the control apparatus and the cache of the hard disk) may be reserved. Compared with that same read data is stored in the two caches, storage space can be saved, thereby effectively improving utilization of the caches.

FIG. 9 is a schematic diagram of a hardware structure of an apparatus for reading a redundant array of independent disks according to an eighth embodiment of the present invention. The apparatus for reading may be the apparatus provided in the sixth embodiment or the seventh embodiment, and may be configured to perform the method provided in the first embodiment to the fifth embodiment. The apparatus for reading may be a server. Referring to FIG. 9, the apparatus for reading includes: at least one communications interface 801, a memory 802, a processor 803 (for example, a CPU), and at least one communications bus 804.

The following describes in detail each component of the apparatus for reading with reference to FIG. 9.

The communications bus 804 is configured to implement connection and communication between the processor 803, the memory 802 and the communications interface 801.

The at least one communications interface 801 (which may be wired or wireless) implements communication and connection between the apparatus and at least one other computer (for example, a host).

The memory 802 may be configured to store a software program and an application module. The processor 803 performs various functional applications and data processing of the apparatus by running the software program and the application module that are stored in the memory 802. The memory 802 may mainly include a program storage area and a data storage area. The program storage area may store an operating system, an application program required by at least one function, and the like. The data storage area may store data created according to the processing of the apparatus (for example, store data returned by a controller of a first hard disk), and the like. In addition, the memory 802 may include a high-speed RAM (Random Access Memory, random access memory), or a non-volatile memory (non-volatile memory), for example, at least one magnetic disk storage device, a flash memory device, or another volatile solid-state storage device.

The processor 803 is a control center of the apparatus and connects each part of the entire apparatus by using various interfaces and communications lines. By running or executing the software program and/or the application module stored in the memory 802, and invoking the data stored in the memory 802, various functions and data processing of the apparatus are performed, thereby implementing overall monitoring on the apparatus.

Specifically, by running or executing the software program and the application module that are stored in the memory 802, and invoking the data stored in the memory 802, the processor 803 may receive a first read request, where the first read request includes an identifier of a to-be-read logical block; send a first command to a controller of a first hard disk when a first cache cache does not include data stored in the to-be-read logical block, where the first cache is a cache of a control apparatus of the redundant array of independent disks RAID, the first hard disk is a hard disk including the to-be-read logical block, and the first command is used to instruct the controller of the first hard disk to return the data stored in the to-be-read logical block; output the data returned by the controller of the first hard disk, and store the returned data in the first cache; and delete the returned data stored in the first cache, or control the controller of the first hard disk to delete the returned data stored in a second cache, where the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

Optionally, when a predetermined condition is satisfied, the processor 803 may delete the returned data stored in the first cache; or
when the predetermined condition is not satisfied, the processor 803 may control the controller of the first hard disk to delete the returned data stored in the second cache, where
the predetermined condition includes either of the following cases: a remaining storage capacity of the first cache is less than a preset storage capacity, and the returned data is data of a specified type.

Optionally, when the processor 803 controls the controller of the first hard disk to delete the returned data stored in the second cache, the first command is further used to instruct the controller of the first hard disk to delete, after returning the data stored in the to-be-read logical block, the returned data stored in the second cache.

Optionally, the first command is a Small Computer System Interface SCSI protocol Read 10 command, and the first command carries first address information, a first identifier, and a second identifier of the logical block, where the first identifier is used to indicate returning data that corresponds to the first address information, and the second identifier is used to indicate deleting, after the data that corresponds to the first address information is returned, the returned data stored in the second cache.

Optionally, the processor 803 may send a second command to the controller of the first hard disk, where the second command is used to instruct the controller of the first hard disk to delete the returned data stored in the second cache.

Optionally, the second command is a SCSI protocol command, and the second command carries second address information and a third identifier of the logical block, where the third identifier is used to indicate deleting data that is in the data stored in the second cache and that corresponds to the second address information.

Optionally, the processor 803 may determine an identifier of a pre-read logical block in the first hard disk according to the identifier of the to-be-read logical block; and send a third command to the controller of the first hard disk, where the third command is used to instruct the controller of the first hard disk to obtain data stored in the pre-read logical block, and store the obtained data in the second cache.

Optionally, the processor 803 may receive a second read request, where the first hard disk includes a logical block that corresponds to the second read request, the first cache does not include data stored in the logical block that corresponds to the second read request, and the third command is further used to instruct the controller of the first hard disk to return the data stored in the logical block that corresponds to the second read request.

Optionally, the third command is a SCSI protocol command, and the third command carries third address information of the logical block, and fourth address information, a fourth identifier, and a fifth identifier of the logical block, where the fourth identifier is used to indicate obtaining data that corresponds to the third address information, and storing the obtained data in the second cache, and the fifth identifier is used to indicate returning data that corresponds to the fourth address information.

It should be noted that, when the apparatus, provided in the foregoing embodiment, for reading a redundant array of independent disks reads data, division of the foregoing function modules is merely used as an example for description. In an actual application, the foregoing functions can be allocated to different function modules and implemented according to a requirement, that is, an internal structure of a device is divided into different function modules to implement all or some of the functions described above. In addition, the apparatus, provided in the foregoing embodiment, for reading a redundant array of independent disks and the embodiments of the method for reading a redundant array of independent disks belong to a same concept. For a specific implementation process of the apparatus, refer to the method embodiments, and details are not described herein again.

A person of ordinary skill in the art may understand that all or some of the steps of the embodiments may be implemented by hardware or by a program instructing related hardware. The program may be stored in a computer-readable storage medium. The storage medium may include: a read-only memory, a magnetic disk, or an optical disc.

The foregoing descriptions are merely examples of the embodiments of the present invention, and are not intended to limit the present invention. Any modification, equivalent replacement, and improvement made without departing from the spirit and principle of the present invention shall fall within the protection scope of the present invention.

## Claims

1. A method for reading a redundant array of independent disks, wherein the method comprises:
receiving a first read request, wherein the first read request comprises an identifier of a to-be-read logical block;
sending a first command to a controller of a first hard disk when a first cache cache does not comprise data stored in the to-be-read logical block, wherein the first cache is a cache of a control apparatus of the redundant array of independent disks RAID, the first hard disk is a hard disk comprising the to-be-read logical block, and the first command is used to instruct the controller of the first hard disk to return the data stored in the to-be-read logical block;
outputting the data returned by the controller of the first hard disk, and storing the returned data in the first cache; and
deleting the returned data stored in the first cache, or controlling the controller of the first hard disk to delete the returned data stored in a second cache, wherein the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

2. The method according to claim 1, wherein the deleting the returned data stored in the first cache, or controlling the controller of the first hard disk to delete the returned data stored in a second cache comprises:
when a predetermined condition is satisfied, deleting the returned data stored in the first cache; or
when the predetermined condition is not satisfied, controlling the controller of the first hard disk to delete the returned data stored in the second cache, wherein
the predetermined condition comprises either of the following cases: a remaining storage capacity of the first cache is less than a preset storage capacity, and the returned data is data of a specified type.

3. The method according to claim 1, wherein when the controller of the first hard disk is controlled to delete the returned data stored in the second cache, the first command is further used to instruct the controller of the first hard disk to delete, after returning the data stored in the to-be-read logical block, the returned data stored in the second cache.

4. The method according to claim 3, wherein the first command is a Small Computer System Interface SCSI protocol Read 10 command, and the first command carries first address information, a first identifier, and a second identifier of the logical block, wherein the first identifier is used to indicate returning data that corresponds to the first address information, and the second identifier is used to indicate deleting, after the data that corresponds to the first address information is returned, the returned data stored in the second cache.

5. The method according to claim 1, wherein the controlling the controller of the first hard disk to delete the returned data stored in a second cache comprises:
sending a second command to the controller of the first hard disk, wherein the second command is used to instruct the controller of the first hard disk to delete the returned data stored in the second cache.

6. The method according to claim 5, wherein the second command is a SCSI protocol command, and the second command carries second address information and a third identifier of the logical block, wherein the third identifier is used to indicate deleting data that is in the data stored in the second cache and that corresponds to the second address information.

7. The method according to any one of claims 1 to 6, wherein the method further comprises:
determining an identifier of a pre-read logical block in the first hard disk according to the identifier of the to-be-read logical block; and
sending a third command to the controller of the first hard disk, wherein the third command is used to instruct the controller of the first hard disk to obtain data stored in the pre-read logical block, and store the obtained data in the second cache.

8. The method according to claim 7, wherein before the sending a third command to the controller of the first hard disk, the method further comprises:
receiving a second read request, wherein the first hard disk comprises a logical block that corresponds to the second read request, the first cache does not comprise data stored in the logical block that corresponds to the second read request, and the third command is further used to instruct the controller of the first hard disk to return the data stored in the logical block that corresponds to the second read request.

9. The method according to claim 8, wherein the third command is a SCSI protocol command, and the third command carries third address information of the logical block, and fourth address information, a fourth identifier, and a fifth identifier of the logical block, wherein the fourth identifier is used to indicate obtaining data that corresponds to the third address information, and storing the obtained data in the second cache, and the fifth identifier is used to indicate returning data that corresponds to the fourth address information.

10. An apparatus for reading a redundant array of independent disks, wherein the apparatus comprises:
a receiving module, configured to receive a first read request, wherein the first read request comprises an identifier of a to-be-read logical block;
a sending module, configured to send a first command to a controller of a first hard disk when a first cache cache does not comprise data stored in the to-be-read logical block, wherein the first cache is a cache of the apparatus, the first hard disk is a hard disk comprising the to-be-read logical block, and the first command is used to instruct the controller of the first hard disk to return the data stored in the to-be-read logical block;
an output module, configured to: output the data returned by the controller of the first hard disk, and store the returned data in the first cache; and
a deletion module, configured to: delete the returned data stored in the first cache, or control the controller of the first hard disk to delete the returned data stored in a second cache, wherein the second cache is a cache of the controller of the first hard disk, and the returned data stored in the second cache is stored after the controller of the first hard disk reads, according to the first command, the data from the to-be-read logical block, or is stored before the controller of the first hard disk receives the first command.

11. The apparatus according to claim 10, wherein the deletion module is configured to:
when a predetermined condition is satisfied, delete the returned data stored in the first cache; or
when the predetermined condition is not satisfied, control the controller of the first hard disk to delete the returned data stored in the second cache, wherein
the predetermined condition comprises either of the following cases: a remaining storage capacity of the first cache is less than a preset storage capacity, and the returned data is data of a specified type.

12. The apparatus according to claim 10, wherein
when the deletion module controls the controller of the first hard disk to delete the returned data stored in the second cache, the first command sent by the sending module is further used to instruct the controller of the first hard disk to delete, after returning the data stored in the to-be-read logical block, the returned data stored in the second cache.

13. The apparatus according to claim 12, wherein the first command is a Small Computer System Interface SCSI protocol Read 10 command, and the first command carries first address information, a first identifier, and a second identifier of the logical block, wherein the first identifier is used to indicate returning data that corresponds to the first address information, and the second identifier is used to indicate deleting, after the data that corresponds to the first address information is returned, the returned data stored in the second cache.

14. The apparatus according to claim 10, wherein the sending module is further configured to:
send a second command to the controller of the first hard disk, wherein the second command is used to instruct the controller of the first hard disk to delete the returned data stored in the second cache.

15. The apparatus according to claim 14, wherein the second command is a SCSI protocol command, and the second command carries second address information and a third identifier of the logical block, wherein the third identifier is used to indicate deleting data that is in the data stored in the second cache and that corresponds to the second address information.

16. The apparatus according to any one of claims 10 to 15, wherein the apparatus further comprises a determining module, wherein
the determining module is configured to determine an identifier of a pre-read logical block in the first hard disk according to the identifier of the to-be-read logical block; and
the sending module is further configured to send a third command to the controller of the first hard disk, wherein the third command is used to instruct the controller of the first hard disk to obtain data stored in the pre-read logical block, and store the obtained data in the second cache.

17. The apparatus according to claim 16, wherein the receiving module is further configured to:
receive a second read request, wherein the first hard disk comprises a logical block that corresponds to the second read request, and the first cache does not comprise data stored in the logical block that corresponds to the second read request; and
the third command sent by the sending module is further used to instruct the controller of the first hard disk to return the data stored in the logical block that corresponds to the second read request.

18. The apparatus according to claim 17, wherein the third command is a SCSI protocol command, and the third command carries third address information of the logical block, and fourth address information, a fourth identifier, and a fifth identifier of the logical block, wherein the fourth identifier is used to indicate obtaining data that corresponds to the third address information, and storing the obtained data in the second cache, and the fifth identifier is used to indicate returning data that corresponds to the fourth address information.
